# FASCICULE DE BREVET EUROPEEN

(11) **EP 1 245 086 B1**
(45) Date de publication et mention de la délivrance du brevet: **02.01.2008**
(21) Numéro de dépôt: 01940609.9
(22) Date de dépôt: 14.05.2001
(51) Int. Cl.: H04B 5/00, G06K 19/077

(54) **BOBINE EMETTRICE ET RECEPTRICE**
EMPFANG-SENDESPULE
TRANSMITTER AND RECEIVER COIL

(30) Priorité: 12.05.2000 FR 0006040
(43) Date de publication de la demande: 02.10.2002
(73) Titulaire: VALEO SECURITE HABITACLE S.A.S., 94042 Créteil Cédex (FR)
(72) Inventeur: GASCHER, Alain, F-75011 PARIS (FR); BAUDARD, Xavier, F-94042 Créteil (FR); TESSIER, Virginie, I-20052 Monza (IT)
(74) Mandataire: Rosolen-Delarue, Katell
(86) Numéro de dépôt international: PCT/FR2001/001486
(87) Numéro de publication internationale: WO 2001/086832

(56) Documents cités:
- EP-A- 0 762 535
- EP-A- 1 043 843
- DE-A- 19 622 387
- FR-A- 2 443 725
- GB-A- 2 326 769
- US-A- 5 567 537
- PATENT ABSTRACTS OF JAPAN vol. 1997, no. 07, 31 juillet 1997 (1997-07-31) & JP 09 064797 A (MATSUSHITA ELECTRIC WORKS LTD), 7 mars 1997 (1997-03-07)

## Description

L'invention porte sur un organe de communication pour système de communication basse fréquence par couplage électro-magnétlque, comprenant au moins une antenne émettrice et/ou réceptrice de champ électro-magnétique sous la forme d'une bobine disposée sur une plaque en substrat servant de support, cette plaque ayant une certaine épaisseur.

Un tel système de communication basse fréquence par couplage électro-magnétique sert tout particulièrement comme système d'accès et de démarrage dit «mains libres » pour un véhicule automobile. Il comprend généralement un organe d'identification monté à bord du véhicule et apte à commander l'ouverture des ouvrants du véhicule ainsi que le démarrage du moteur du véhicule. II comprend aussi un organe identifiant destiné à être porté par l'utilisateur du véhicule et qui est apte à communiquer par couplage électro-magnétique avec l'organe Identificateur de telle sorte que si l'organe identificateur est reconnu par l'organe identifiant alors que l'utilisateur se trouve à proximité de son véhicule, les ouvrants du véhicule sont automatiquement ouverts et/ou le moteur du véhicule est automatiquement démarré.

L'organe identifiant fait généralement partie Intégrante d'un badge plat ou d'un porte clé. L'antenne de réception de cet organe identifiant qui est une bobine électro-magnétique est généralement placée sur un petit boîtier interface lui-même fixé à la plaque en substrat

Le but de l'invention est de proposer un tel organe de communication dont la bobine de réception du champs électro-magnétlque soit d'une forme plus compacte et puisse également être plus sensible, moins chère et plus solide.

Le document DE 19 622 387 décrit un organe de communication tel que défini plus haut, dans lequel la bobine a des spires qui sont enroulées dans l'épaisseur de la plaque en substrat. Avec cette construction, on peut diminuer l'épaisseur de l'organe de communication en augmentant la dimensions des spires de la bobine.

Selon un mode de réalisation de l'organe de communication selon, la plaque est munie d'un évidemment et la bobine est encastrée dans ledit évidemment.

Selon encore un mode de réalisation de l'organe de communication les spires de la bobines sont enroulées autour de la plaque en substrat et de préférence la plaque en substrat est chargée partiellement en ferrite pour constituer un noyau pour la bobine.

La présente invention propose un autre mode de réalisation qui confère à l'organe de communication une résistance accrue aux chocs qui tendent à désolidariser la bobine de la plaque support.

Selon l'invention, chaque spire de la bobine est constituée par une piste conductrice sur une première face de la plaque en substrat, une seconde piste conductrice sur une seconde face de la plaque en substrat opposée à la première face et par deux traversées conductrices traversant l'épaisseur de la plaque en substrat et reliant la première et la seconde piste conductrice.

Les exemples de réalisation ci-dessus de l'organe de communication selon l'invention sont décrits ci-après en détails et illustrés sur les dessins.

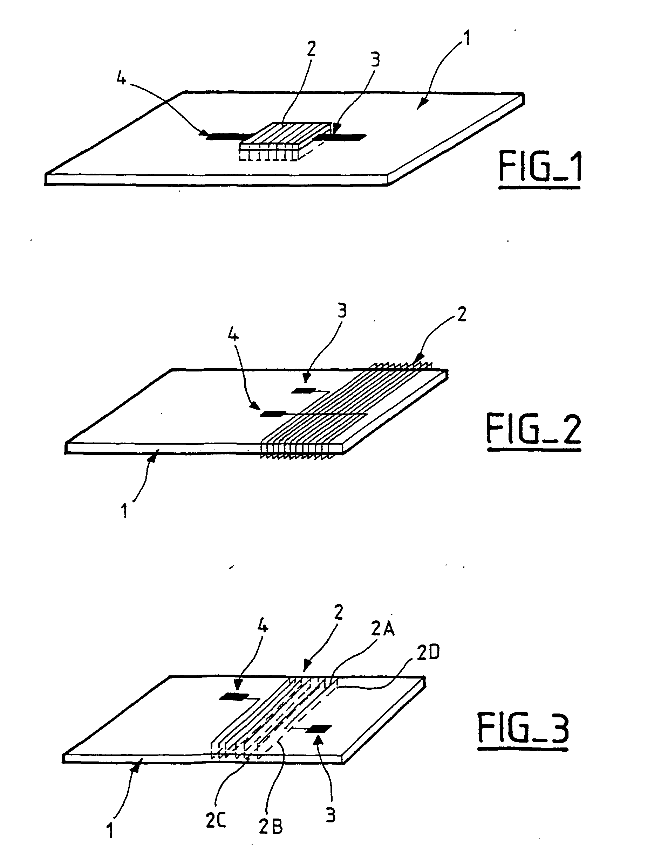

Figure 1, l'organe de communication comprend une plaque en substrat (plaque de circuit imprimé) ayant une certaine épaisseur et servant de support à une bobine électro-conductrice 2 formant l'antenne de réception de champ élocto-magnétique de l'organe de communication. La bobine 2 est encastrée dans un évidemment prévu dans la plaque en substrat. De la sorte, les spires de la bobines sont enroulées, de préférence autour d'un noyau en ferrite, dans l'épaisseur de la plaque en substrat Les bornes 3 et 4 de la bobines sont gravées sur la plaque en substrat.

Sur la figure 2. les spires de la bobine 2 sont enroulées autour de la plaque en substrat 1 qui est de préférence chargée partiellement en ferrite dans la zone d'enroulement des spires, ou encore être en matériau magnétique ou en plasto-fentte pour constituer un noyau pour la bobine. Les bornes 3, 4 de la bobine sont gravées sur la plaque en substrat.

Sur la figure 3, chaque spire de la bobine 2 est constituée par une première piste conductrice 2A sur une première face de la plaque en substrat par une seconde piste conductrice 2B sur une seconde face de la plaque en substrat opposée à la première face et par deux traversées conductrices 2C,2D traversant l'épaisseur de la plaque en substrat et reliant la première et la seconde piste conductrice, Les bornes 3 et 4 de la bobine sont encore gravées sur la plaque en substrat 1. De même que précédemment, la plaque substrat 1 pourra être chargée partiellement en ferrite dans la zone d'enroulement des spires, ou encore être en materiau magnétique ou en plasto-ferrite pour constituer un noyau pour la bobine,

Le noyau en ferrite de la bobine 2 sert en particulier à augmenter l'inductance de la bobine et donc sa sensibilité sans augmenter l'épaisseur de l'organe de communication.

## Revendications

1. Un organe de communication basse fréquence par couplage électro-magnétique, comprenant au moins une plaque en substrat (1) servant de support, cette plaque ayant une certaine épaisseur, et une antenne émettrice et/ou réceptrice de champ électro-magnétique sous la forme d'une bobine (2) comprenant des spires qui sont enroulées dans l'épaisseur de la plaque en substrat, **caractérisé en ce que** chaque spire de la bobine est constituée par une piste conductrice (2A) sur une première face de la plaque en substrat, une seconde piste conductrice (2B) sur une seconde face de la plaque en substrat opposée à la première face et par deux traversées conductrices (2C, 2D) traversant l'épaisseur de la plaque en substrat et reliant la première et la seconde piste conductrice.

2. Organe selon la revendication 1, dans lequel la plaque en substrat est en matériau chargé partiellement en ferrite ou en matériau magnétique ou en plasto-ferrite pour constituer un noyau pour la bobine.

3. Organe selon l'une quelconque des revendications précédentes, **caractérisé en ce qu'**il fait partie intégrante d'un badge plat ou d'un porte clé.

## Claims

1. A low frequency electronic coupling communication system, comprising at least one metal substrate (1) used as a base, said plate having a certain thickness, and a transmitting and/or receiving electromagnetic field antenna in the form of a spool (2) comprising loops which are rolled within the substrate plate, **characterised in that** each loop of the spool is made up of a conductor track (2A) on a first side of the substrate plate, a second conductor track (2B) on a second side of the substrate plate opposing the first side with two conductive crossings (2C, 2D) crossing the thickness of the substrate plate and connecting the first and second conductor tracks.

2. System according to claim 1 in which the substrate plate is of material partially charged with ferrite or a magnetic material or plasto-ferrite to constitute a core for the spool.

3. System according to any of the claims mentioned above, **characterised in that** it is an integrated part of a flat badge or key fob.

## Patentansprüche

1. Niedrigfrequenz-Kommunikationsteil zur Kommunikation durch elektromagnetische Kopplung mit mindestens einer als Träger dienenden Substratplatte (1), wobei die Platte eine bestimmte Dicke aufweist, und einer als Spule (2) ausgebildeten Sende- und/oder Empfangsantenne für das elektromagnetische Feld, mit Windungen, die in der Dicke der Substratplatte gewickelt sind, **dadurch gekennzeichnet, dass** jede Windung der Spule von einer Leiterbahn (2A) auf einer ersten Seite der Substratplatte, einer zweiten Leiterbahn (2B) auf einer der ersten Seite abgewandten zweiten Seite der Substratplatte und zwei leitenden Durchführungen (2C, 2D) gebildet wird, welche die Substratplatte in ihrer Dicke durchqueren und die erste und die zweite Leiterbahn miteinander verbinden.

2. Teil nach Anspruch 1, bei dem die Substratplatte aus einem Werkstoff hergestellt ist, der zur Bildung eines Spulenkerns teilweise Ferrit oder Magnetwerkstoff oder Plastoferrit enthält.

3. Teil nach einem der vorhergehenden Ansprüche, **dadurch gekennzeichnet, dass** es Bestandteil eines flachen Ansteckschildes oder eines Schlüsselanhängers ist.
